# EUROPEAN PATENT SPECIFICATION

(11) **EP 2 581 276 B1**
(45) Date of publication and mention of the grant of the patent: **21.10.2015**
(21) Application number: 12165076.6
(22) Date of filing: 20.04.2012
(51) Int. Cl.: B60R 21/2338, B60R 21/233, B60R 21/231

(54) **Tubular Airbag**
Tubular airbag
Airbag tubulaire

(30) Priority: 11.10.2011 US 201161545641 P; 23.03.2012 US 201213428100
(43) Date of publication of application: 17.04.2013
(73) Proprietor: Zodiac Seats France, 36100 Issoudun (FR)
(72) Inventor: Cailleteau, Jeremy, 36120 St. Aout (FR); Quatanens, Frederic, 36100 Issoudun (FR)
(74) Representative: Phillips & Leigh

(56) References cited:
- EP-A1- 2 077 207
- WO-A1-96/40571
- GB-A- 1 362 672
- GB-A- 2 289 653
- US-A- 3 731 949
- US-A- 3 747 952
- US-A1- 2007 252 367

## Description

### FIELD OF THE INVENTION

Examples of the present invention relate generally to airbags for use in passenger transport vehicles. The airbags are designed to safely interrupt a passenger's forward momentum in the event of a crash condition.

### BACKGROUND

Airbags are occupant restraining devices, which typically include a flexible envelope or "bag" that is designed to inflate rapidly during a collision in order to prevent the vehicle's occupants from striking interior objects located in front of (or, in some cases, on the side of) the occupant. In automobiles, airbags are designed to prevent occupants from striking the steering wheel, the vehicle door, a window, or any other interior objects. In aircraft, airbags are designed to prevent passengers from striking the seat in front each passenger, the tray tables, a window, or any other interior objects. Airbags on passenger rail cars (such as trains, monorails, trolleys), motorcycles, and other passenger transport vehicles work similarly.

Most modem vehicles contain multiple airbags. For example, most automobiles provide an airbag in front of each occupant seating position (at least in the front seat), to protect the head and torso. They may also contain knee airbags, which protect the occupant's knees and legs. Most aircraft provide airbags either positioned in the back of each seat (so as to deploy for the passenger sitting behind that seat) or in the seat belts. (For example, passengers sitting in the front seat or bulkhead in the aircraft do not have a seat in front of them, so in this instance, the airbag may be positioned in the passenger seat belt.) Passenger vehicles may also contain airbags in side locations, which can inflate between an occupant and the vehicle door or the vehicle window or wall.

Typically, sensors deploy one or more airbags in an impact zone at variable rates based on the type and severity of impact. Most airbags are designed to only inflate in moderate to severe frontal crashes. Airbags are normally designed with the intention of supplementing the protection of an occupant who is correctly restrained with a seatbelt.

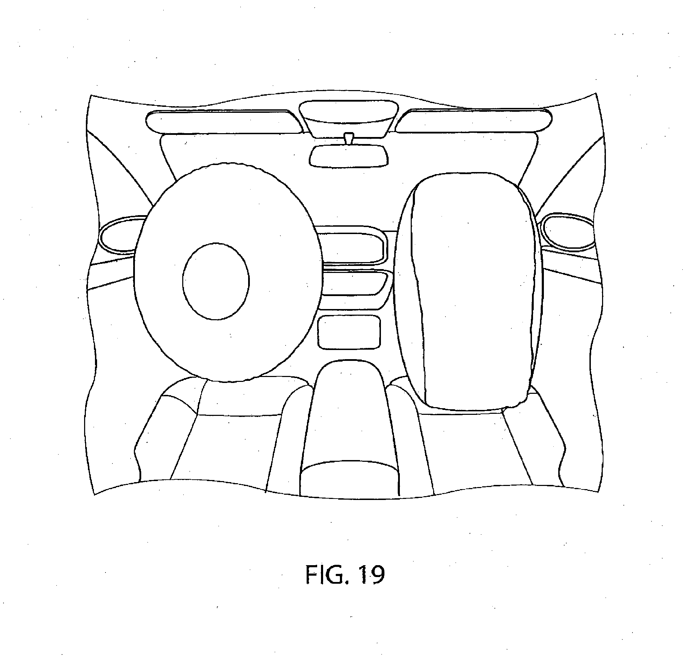

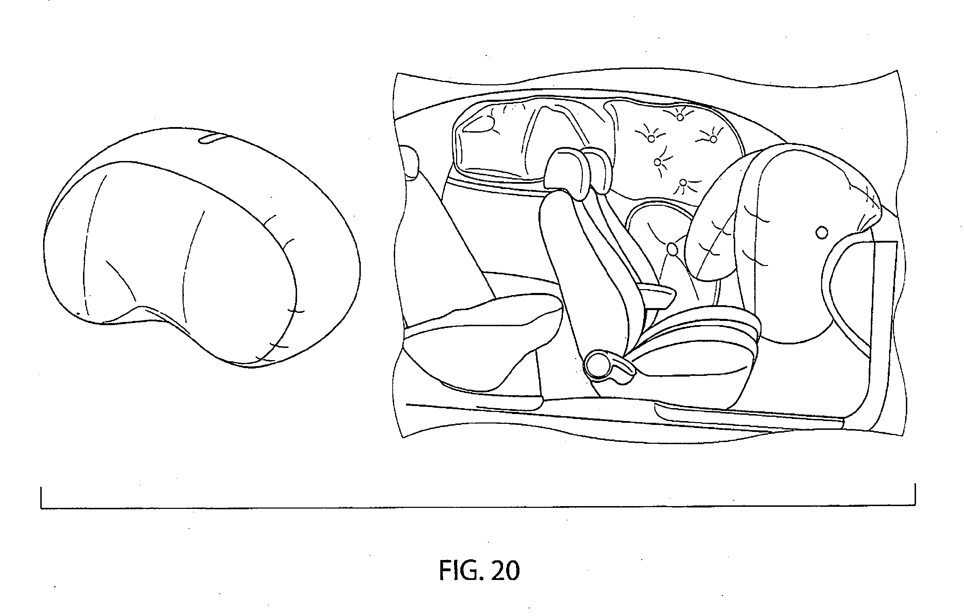

Airbags are typically designed as large bags that require a large volume of gas for their inflation. They are typically round in shape, or peanut shaped, examples of which are shown in Figures 19 and 20. They are often formed by sewing two or three panels together in order to form a balloon or peanut shape. An alternate airbag shape that was designed for side-impact head protection in automobiles is the Inflatable Tubular Structure (ITS) airbag. This system is a single inflatable tube that stows in the vehicle's interior roof-rail. During a crash, the ITS deploys across the side windows to offer a cushioning restraint for the vehicle occupants. GB 1362672 (Nissan Motor) relates to a vehicular safety device which will not only adequately protect a vehicle occupant from striking against the structural parts of a vehicle compartment during a collision of a motor vehicle, but will also reduce the possibility of secondary injury to eardrums and/or lungs due to a sudden rise in the air pressure and loud detonation in the vehicle compartment during collision of the motor vehicle. The vehicular safety device comprises a gas inflatable structure and a pressurized gas supply container connected to the gas inflatable structure, the pressurized gas supply container being adapted to supply pressur ized gas to inflate the gas inflatable structure in response to an impact resulting from said collision, the gas inflatable structure having a collapsed storage position and an inflated protective position between the occupant and the structural parts of the vehicle compartment when inflated, the external dimensions of the gas inflatable structure defining a volume greater than the volume of gas in the inflated gas inflatable structure, whereby air is admissible into the remaining volume portion during inflation. US2007/252367 (Zhong Zhihua et al) relates to sandwiched tubular safety airbag comprising an air tube truss formed by a bending hollow air tube, a lower air cushion and an upper air cushion. The lower air cushion is provided at the bottom of the air tube truss, and the upper air cushion is provided on top of the air tube truss. EP2077207 (Takata Corp), which shows the preamble of claim 1, relates to an occupant restraint system that includes a side airbag device having a first airbag for, in a side collision, receiving gas supply from an inflator and inflating to deploy such that the first airbag covers a side internal surface of a passenger compartment, and a rear seat airbag device having a second airbag that is housed in a support section formed in a rear tray. The support section is covered with a lid, and, in a side collision, receives gas supply from the inflator, presses to open the lid, projects out of the support section, and inflates to deploy toward seating surfaces of rear seats. In one embodiment, shows a center airbag, the center airbag has a thorax restraint region formed in the side wall thereof The center airbag is formed by sewing together the thorax restraint regions of the two airbags having the same shape in such a manner that concave portions are formed in the middle of the airbags. The thorax restraint regions are panel-like portions located in the concave portions 26a. Each of the thorax restraint regions is surrounded by the circular circumference of the airbag, and is formed as a thin panel by joining with an adhesive and sewing together portions of the two foundation cloths. The two airbags can be integrated into one unit by sewing together portions of the foundation cloths in advance, corresponding to the thorax restraint regions of the two airbags having the same shape. This provides shapes that are symmetrical in relation to the joining face between the two airbags , thereby allowing both of the occupants seated on the seats to be restrained in an equal manner. WO96/40571 relates to an inflatable self-sealing valveless fluid or gas container useable for a wide variety of applications including cushioning, package filler, mattresses, rafts and the like. The container is formed from one or more inflatable self-sealing elements, each inflatable element being formed from a pair of inflatable cells.

Since their invention in the early 1950's and introduction in the mid-1970's, airbags have continually been improved upon. However, further airbag improvements are desirable, including airbags that have varying designs for varying types of seating arrangements in passenger vehicles.

### BRIEF SUMMARY

Examples of the invention described herein thus provide airbags that are designed to use a lower inflation volume than traditional airbags. In one example, this is accomplished by providing a plurality of tubular airbags secured to one another.

### STATEMENT OF INVENTION

A tubular airbag system and a tubular airbag for use in a passenger transport system and a method for installing a tubular airbag system in accordance with the present invention are defined by the appended claims.

### BRIEF DESCRIPTION OF THE DRAWINGS

FIG. 1 shows a vehicle occupant being braced by a tubular airbag.
FIG. 2 shows a side perspective view of a tubular airbag.
FIG. 3 shows a top plan cross-sectional view of the top layer of airbag of FIG. 2.
FIG. 4 a top plan cross-sectional view of an airbag having four tubular structures, before the tubular structures are stacked or otherwise secured.
FIG. 5 shows a side view schematic of a tubular airbag having tubular structures with a circular cross-section.
FIG. 6 shows a top plan view of one example of a tubular airbag with a cushion.
FIG. 7 shows a top perspective view of one example of a tubular airbag with a cushion.
FIG. 8 shows a top plan view of one example of a tubular airbag with a cushion.
FIG. 9 shows a crash sequence and the deployment of a tubular airbag.
FIG. 10 shows a side perspective view of an alternate tubular airbag.
FIG. 11 shows a side plan view of the airbag of FIG. 10.
FIG. 12 shows a top plan cross-sectional view of the upper layer of the airbag of FIGS. 10 and 11, before the tubular structures are stacked or otherwise secured.
FIG. 13 shows a side view of a crash sequence and the deployment of a tubular airbag of FIGS. 10 and 11.
FIG. 14 shows a top view of a crash sequence and the deployment of a tubular airbag of FIGS. 10 and 11.
FIG. 15 shows various sewing and folding configurations for tubular airbags.
FIG. 16 shows an end plan view of a set of tubular airbags, with a secured junction between the top layer of tubes and the lower layer of tubes.
FIG. 17 shows an end plan view of a set of tubular airbags, without a secured junction between the top layer of tubes and the lower layer of tubes, but with a side strap in place.
FIG. 18 shows one particular folding sequence for the tubular airbags.
FIG. 19 shows a prior art airbag having a spherical balloon shape.
FIG. 20 shows a prior art airbag having a peanut balloon shape.

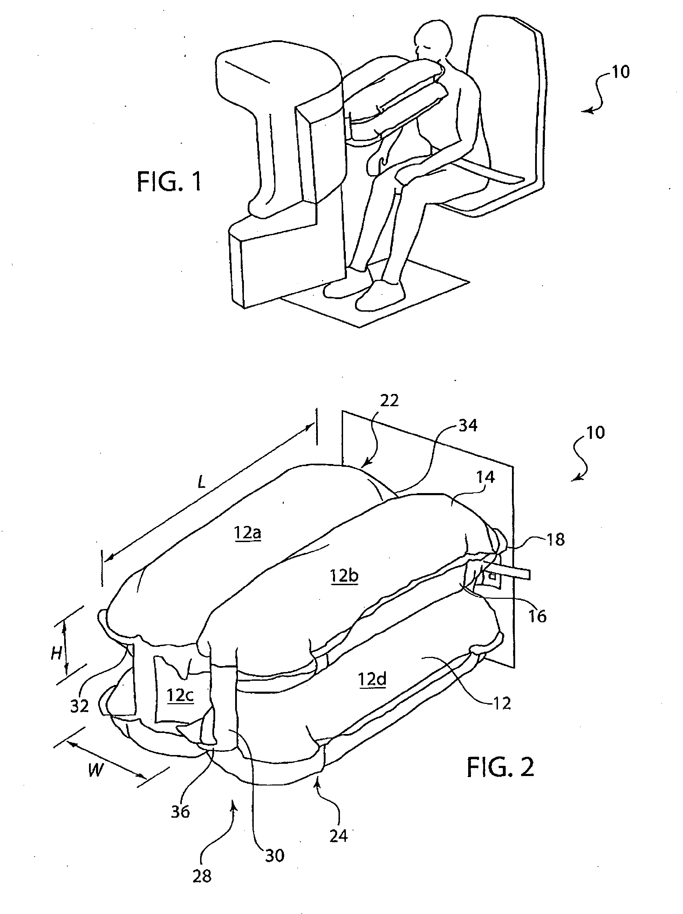

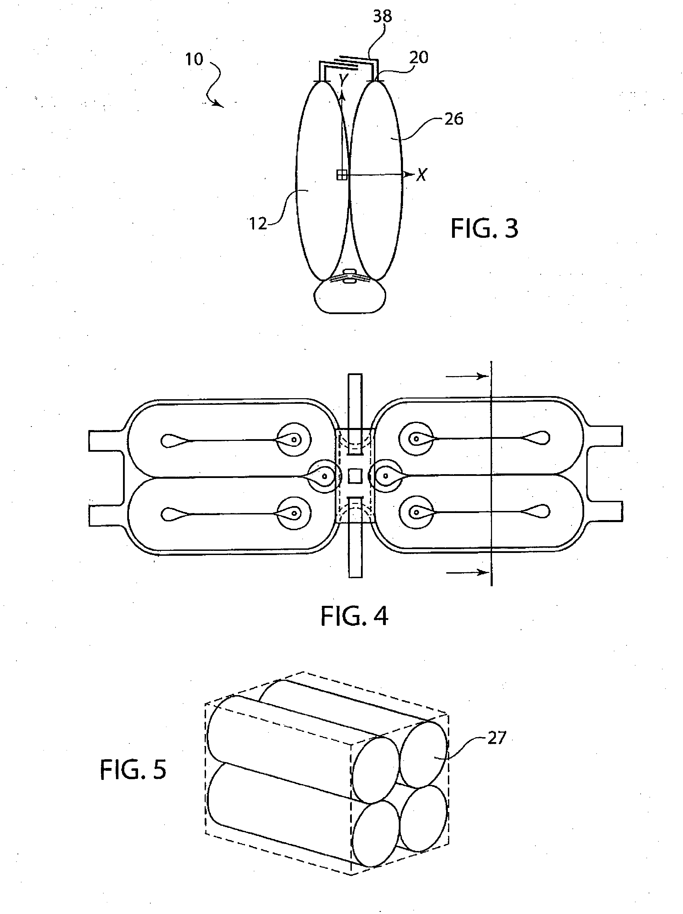

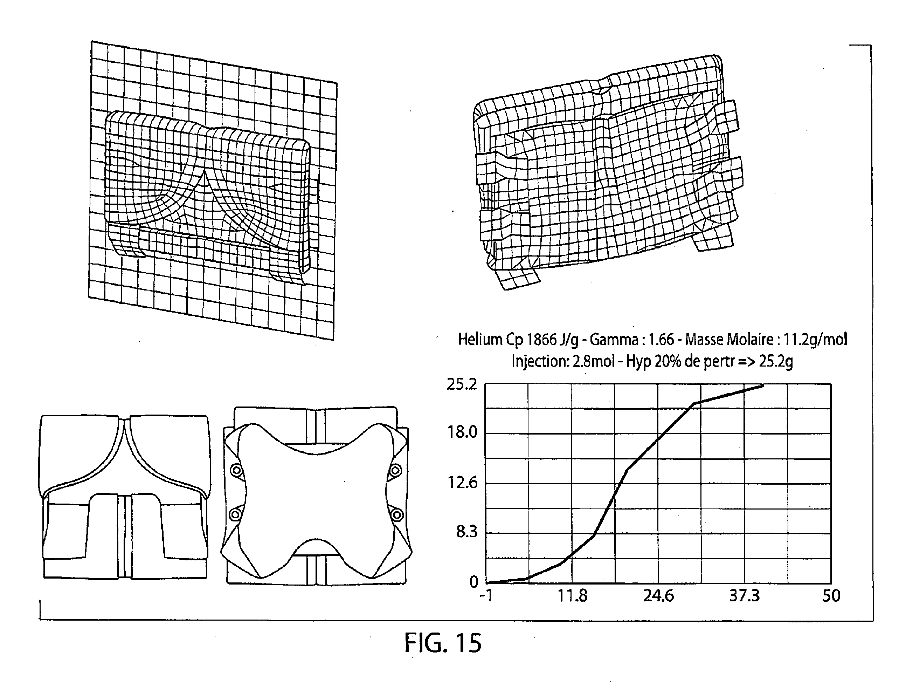

Figures 5 to 8 and Figure 16 and 17 do not form part of the present invention but are retained as relevant technical background. The remaining Figures 1 to 4, 9 to 15 and Figures 18 to 20 form part of the present invention in that they relate to a tubular airbag system comprising a plurality of tubular structures.

### DETAILED DESCRIPTION

Rather than requiring a large volume of gas to fill a large round airbag, it is desirable to design an airbag that reduces the global inflated volume of the airbag. This can require less gas to inflate the bag, allowing the bag to fill more quickly and efficiently. It can also reduce the overall weight of the total airbag system, by allowing use of a smaller inflator. It is also desirable to design airbags having varying shapes, and particularly, shapes that cause the airbag's inflated position to be closer to the occupant. This can improve performance of the airbag (as measured by head injury criteria) by causing the bag to be in earlier contact with the vehicle occupant. It is also desirable to provide an airbag that has a shape and design that allows it to be easier to produce and fold. These and other advantages are achieved by the tubular airbags of examples of the present invention. The airbags are provided as inflatable cushions that are made of a tubular shape and oriented in a particular configuration. In a specific example, multiple tubular structures are positioned in a generally parallel configuration to one another.

Accordingly, examples of the present invention provide an airbag that has one or more tubular structures. The airbag may be associated with a seat back, such that the airbag deploys backward to support a passenger in a seat behind. Alternatively, it may be associated with a steering wheel, a side wall of a vehicle, or any other vehicle structure.

One example of a tubular airbag 10 is shown in Figures 1 and 2. Airbag 10 is formed from a series of tubular structures 12. Tubular structures 12 are formed as individual tubes. They may be fabric tubes, pliable plastic tubes, or any other appropriate material that can be inflated to hold a volume of gas. Each tubular structure 12 generally has a length L, a width W, and a height H. The length dimension "L" is greater than the width "W" or the height "H" dimension. In a particular example, tubular structures 12 may be formed from top 14 and bottom 16 sheets of material, joined at a seam 18 that extends generally around the perimeter of the structure 12. Joining may be accomplished by stitching, bonding, gluing, or any other appropriate securing or sealing option. However, it should be understood that tubular structures 12 may be otherwise formed. For example, a single sheet of material may have its edges sewn or glued together in order to create a single seam on one side, with one (or both) ends sewn or glued together (or overlapped and secured) in order to close the end of tube.

Although the tubular structures are shown as having a rounded top surface 22 and a rounded bottom surface 24 such that they have an oval-like cross section 26, it should also be understood that tubular structures 12 may be formed as having a square, rectangular, triangular, or round or other cross section. The term "tubular" is not intended to be restrictive to a particular shape, but is instead intended to refer to a generally elongated tube-like structure that has a hollow interior that can accept a volume of inflation gas. The structure may be any shape, as long as it has a length that is greater than either its width or its height, and has an interior hollow area to accept inflation gas. Figure 5 illustrates an example wherein the tubular structures are formed as structures having a circular cross-section 27, as opposed to an oval cross-section.

At one end of each structure 12 is an opening 20 for receiving inflation gas. In use and during a crash condition, inflation gas is immediately and rapidly pumped into each opening 20 in each structure 12 in order to cause the airbag 10 to inflate and cushion an occupant's forward momentum.

One of the benefits of designing the airbag 10 as having a plurality of tubular structures 12 that are individually inflated rather (simultaneously or one after the other) than one single airbag of the prior art is that the tubular airbag 10 requires a lower volume of gas for inflation. Thus, although the bag itself contains requires more material and may have a greater weight than a traditional airbag, the volume of the inflator gas bottle required to fill the airbag can be smaller, so that the overall system has a lower global weight. The tubular shape reduces the stress on the material, and based on the pressure formula [force=pressure/surface], a lighter and thinner material can also be used to create airbag 10. Airbag 10 also requires a smaller volume of gas to inflate than a traditional airbag that is not divided into distinct structures 12, because the use of tubular structures 12 as opposed to a large air bag reduces the total inflated volume of the airbag 10. For example, the volume of gas required to fill an airbag 10 in accordance with the present invention, i.e., one that is formed by tubular structures 12, is about 20-25% less than the volume required for a traditional air bag having a similar length and width. According to the below calculation, the volume savings is about 22%:

The ratio is the following at iso head injuries performance:

3D bag (which refers to a traditional round airbag) volume is Length x Width x Height so L x W x W when width=height.

By contrast, the tubular airbag structure provides the following volume calculations which compare a parallelepiped-shaped air bag to the tubular airbags described herein:
(with heights equivalent) 4 x Length x (Tube diameter x Tube diameter x3.14/4) = As tube diameter is equivalent to half of the Width so 4xLx(W/2xW/2x3.14/4) = LxWxWx3.14/4 so for the same bag behavior in term of protection, there is -22% volume less to inflate (0.785-1 * 100%) so LxWxWx 0.785 (tubular bag volume) < LxWxW (3d bag volume). A schematic of these comparative dimensions is shown in Figure 5.

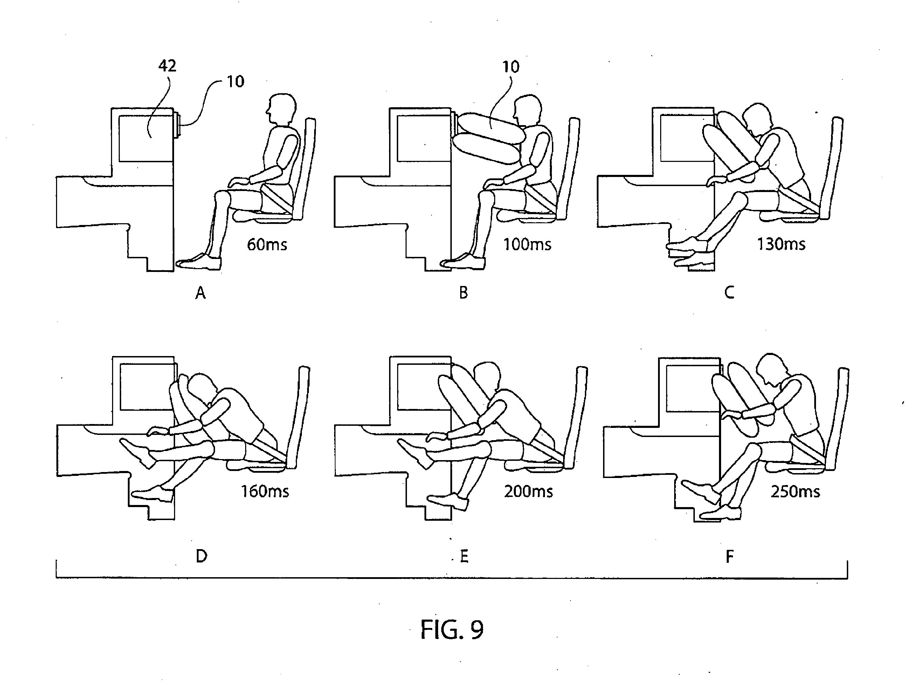

The airbag also allows for the use of a smaller inflator volume compared to the bag performance because of the tube behavior in the very early phase of the occupant body displacement, as shown in Figures 9 and 13-14. The tubes may not, and need not, inflate completely in order for the airbag 10 to be effective, and this can reduce some of the inflation volume required as well.

Inflation of each tubular structure is manageable in a number of ways. For example, the inflation gas may enter each tube individually, such that one fill tube can be directly connected to the inflator while the other structures are filled through this first tube. The size of the filling opening on the structure and/or the fill tube may be designed to optimize and manage a desired filling sequence. For example, a bigger opening or a bigger tube is quicker to fill; a smaller opening or a smaller tube is slower to fill. In the example where the tubular structures are provided in a stacked configuration, it may be desirable to first inflate the upper layer of structures, followed by inflation of the lower layer of structures. There may be one, two, more fill tubes used.

A further benefit of the airbag system 10 is that if, for some reason, one of the openings 20 becomes clogged or unworkable or if one of the structures 12 becomes torn or otherwise damaged, there is at least one other tubular structure 12 connected thereto that can still be inflated and provide at least a portion of the desired cushioning effect.

In one particular example, four tubular structures 12 may be sewn to one another along their length L in order to form a roughly rectangular airbag, as shown in Figure 2. Each structure 12 generally has a similar structure, in that the length L (as well as the height H and the width W) of each of the tubular structures is about the same. In a particular example, the length may be about 500-700 mm, and in particular example, may be about 600 mm; the height may be about 300-400 mm, and in a particular example, may be about 320 mm, ; and the width may be about 300-400 mm, and in a particular example, may be about 320 mm. The height and width will generally be similar, but they need not be identical.

The structures 12 are secured to one another via a securing system 28. Securing system 28 may be formed of any appropriate means, including but not limited to one or more straps 30 configured to secure structures 12 to one another, stitching or sewing the structures 12 to one another, using glue or tape or any other appropriate adhesive or bonding material to secure the structures 12 to one another, using a separate element to secure the structures 12 to one another, or any combination thereof. The general goal of securing system is to cause the airbag structures 12 to extend as a unit once inflated. It is preferable that the structures do not spread apart upon inflation, lest they not be effective at catching the vehicle occupant's forward momentum

In the example shown in Figure 2, the securing system 28 is defined in part by two straps 30, which are secured to ends 32 of each structure 12. Straps 30 cause the structures 12 to extend outwardly (upon inflation) in a collective manner, such that the ends 32 stay close to one another upon airbag deployment, rather than splaying away from one another. The airbag of Figure 2 also provides the top two structures 12A and 12B secured to one another via stitching along an internal seam 34 and the bottom two structures 12C and 12D secured to one another via stitching along an internal seam 36.

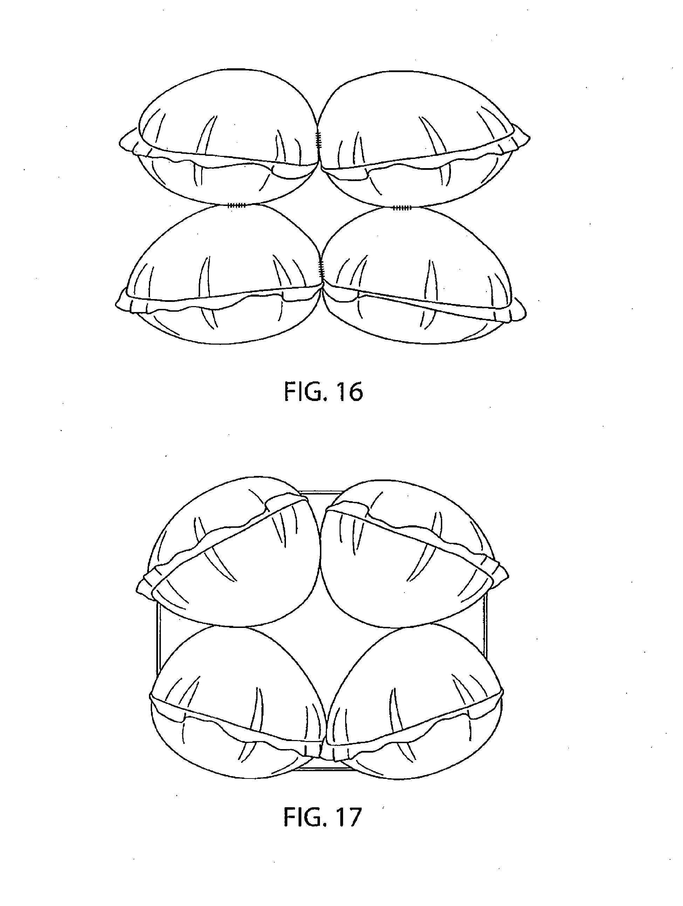

Figure 16 shows an end view of a collection of tubular structures that are joined at a junction (where the top and bottom tubular structure contact one another) via stitching, adhesives, welding (such as high frequency welding) or ay other appropriate method that links structures 12 together. Figure 17 shows an end view of a collection of tubular structures that are joined via a strap, avoiding a junction point in the middle of the tubes. The strap is shown as being a side strap, but it should be understood that the strap may be positioned anywhere along the collection of structures, for each at the front and/or back ends or anywhere along the sides. The airbags may be secured in any number of ways, with a junction and a strap, with only a junction, or with only strap.

Referring now to Figures 3 and 4, an opening 20 of each structure 12 may have a tube 38 extending therefrom. Tube 38 is fluidly connected to opening 20 and further provides a fluid connection or link to a gas inflator system. Tube 38 may be any desired length or shape. It is generally a connection tube for inflation. As shown in Figure 3, two or more connection tubes 38 from two or more different tubular structures 12 may be linked together, such that they share a common gas inflator system. Alternatively, tubes 38 may remain separate from one another and be connected separately to one or more gas inflator systems. Any appropriate sequence for inflating the tubular structures may be used, and may be dependent upon particular aircraft features and capabilities.

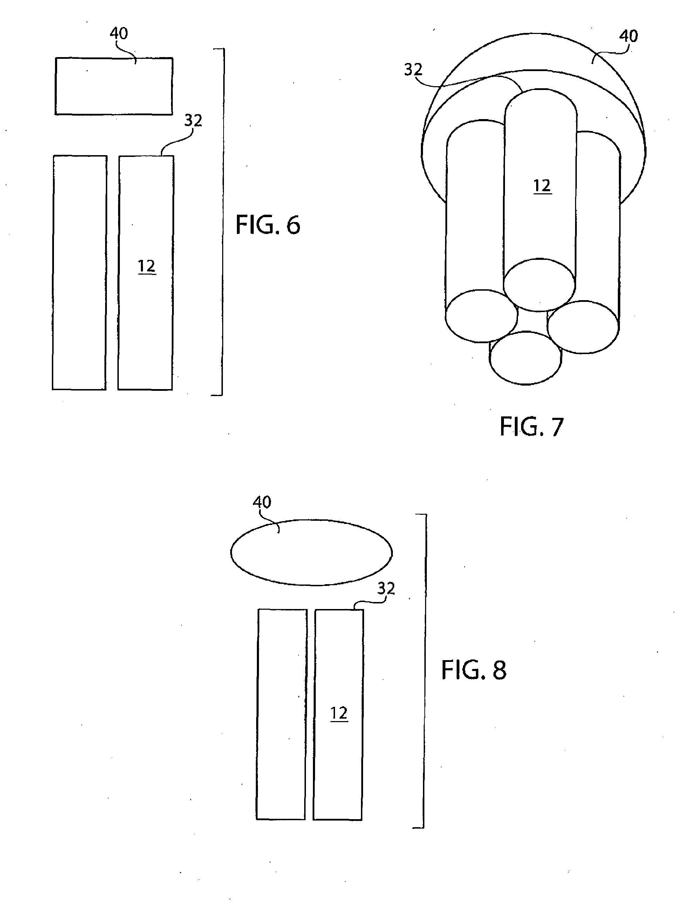

Another form of a securing system 28 is shown in Figures 6-8. In these examples, securing system is formed at least in part by a cushion 40. Cushion 40 is secured to ends 32 of tubular structures 12 as a way to (a) keep the ends connected to one another but also to (b) provide a cushioned surface for cushioning the vehicle occupant's forward movement. Cushion may be formed from the same or different material that forms tubular structures. One or more of the tubular structure ends 32 may be designed to fluidly communicate with cushion 40, such that inflation gas that enters structure 12 extends further into the cushion 40 so that cushion inflates simultaneously. Alternatively, cushion 40 may be provided with its own inflation tube, such that cushion is separately inflated. Cushion 40 may be provided in any appropriate shape, and is shown in Figure 6 as having a square-like shape, in Figure 7 as having a generally circular shape, and in Figure 8 as having a generally crescent or oval shape. In another example (not shown), cushion may be applied to overlay a top of two tubular structures (e.g., 12A and 12B) in order to form a top layer.

Figure 9 illustrates a crash sequence showing the inflation of a tubular airbag 10 and how it braces a vehicle occupant's impact. Frame A shows one location where airbag 10 may be secured to a seat back 42. It is generally positioned at face or eye level. Frame B shows the airbag in its deployment position. Airbag 10 may begin to deploy immediately upon detection of a crash condition, which is usually within (and often typically before) 100ms of detection of the crash condition. (Any type of wiring, crash sensor system, and inflation system may be used to indicate that a crash condition has occurred and to cause the subsequent inflation of the airbag.) Frames C-E illustrate how the tubular airbag 10 prevents the passenger from hitting the seat back 42 (or other vehicle component) in front of the passenger. The sequences may take in total between about 10 to 100ms, depending of the gas flow of the inflator.

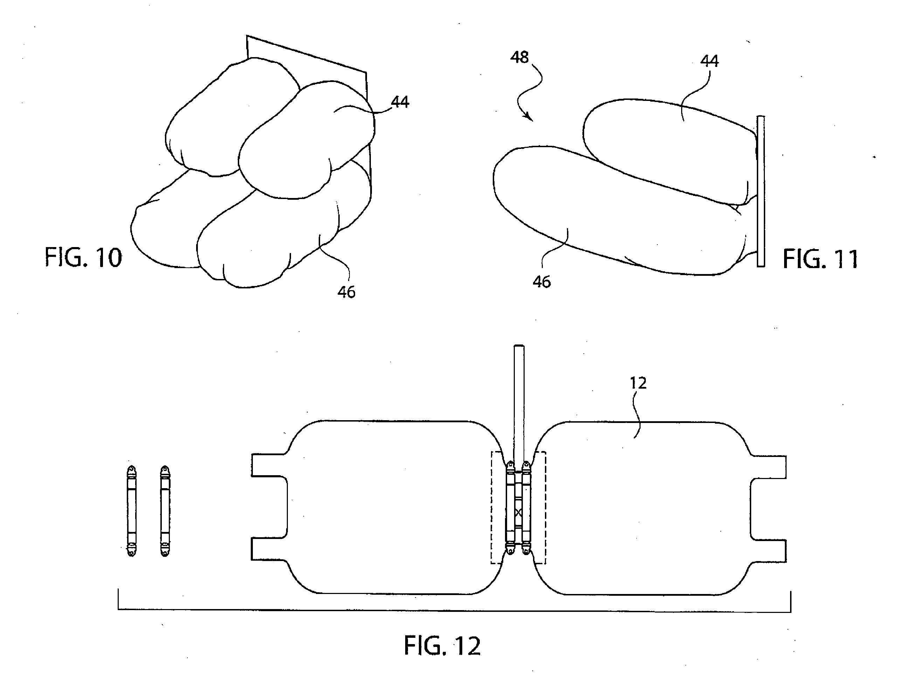

Figures 10-12 show an alternate example of a tubular airbag having structures 12 of varied sizes. The structures 12 that form an upper layer 44 are slightly shorter in length than the structures 12 that form the lower layer 46. The intent and background of this design is to provide an indented area 48 that can help support a vehicle occupant's face more fully than if all structures are of equal length. In a specific example, the upper layer of structures 12 is about 2/3 of the length of the lower layer 46 of structures 12. For example, the structures 12 of the upper layer 44 may have a length of about 400-500 mm, and in a particular example, nay be about 440 mm, and the structures 12 of the lower layer 46 may have a length of about 500-700 mm, and in particular example, may be about 600 mm. FIG. 12 illustrates a cross-sectional view of the upper layer 44 of the airbag, before the tubular structures are stacked or otherwise secured.

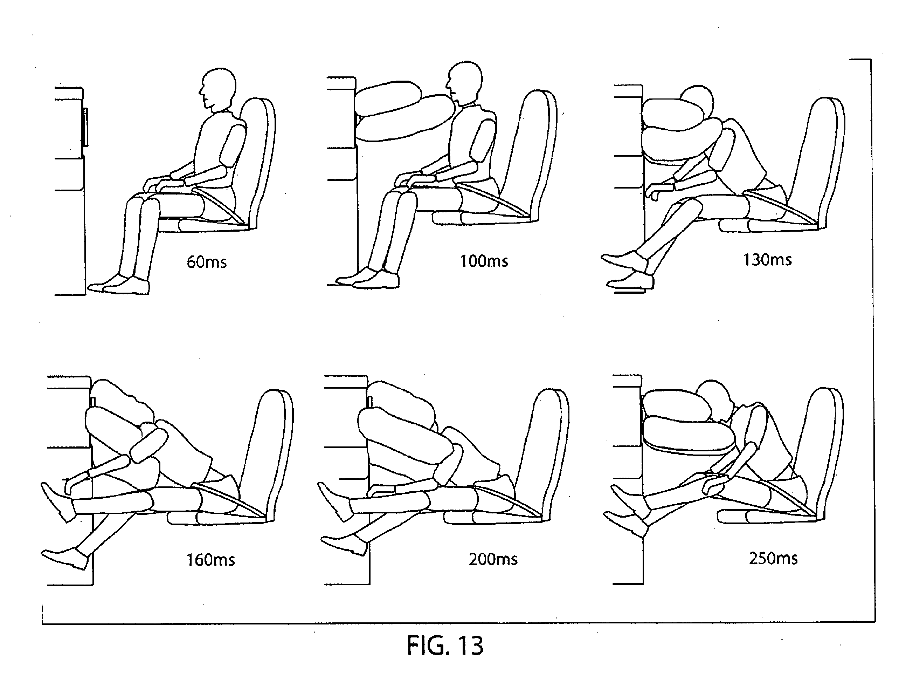

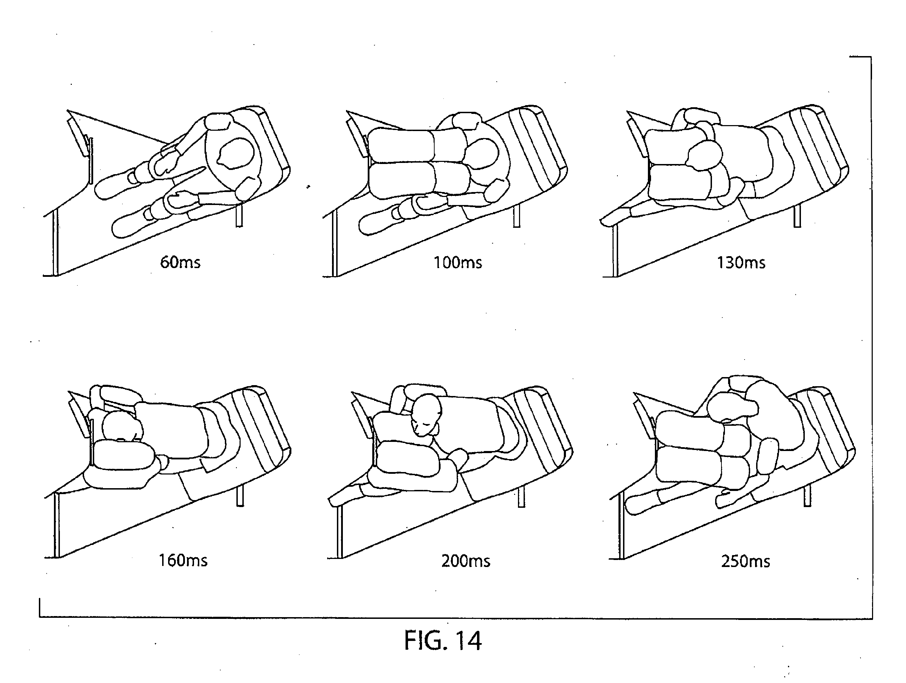

One example of a crash sequence showing this enhanced support is illustrated in Figures 13 and 14, which show a side and top view of a similar crash condition. The shortened structures are intended to protect the occupant's head at the end of its trajectory.

This example uses even less gas for inflation of the airbag 10 because of the shortened length of the structure(s) positioned at upper layer 44. For example, a tubular airbag comprised of four tubular structures 12 (with the height and width remaining the same, but having varied lengths) is about 20-25% and by certain calculations, about 22% volume less to inflate than a traditional parallelepiped-shaped airbag. This saving in volume allows the use of a smaller inflator which gives a weight reduction of almost 18% in the gas inflator weight.

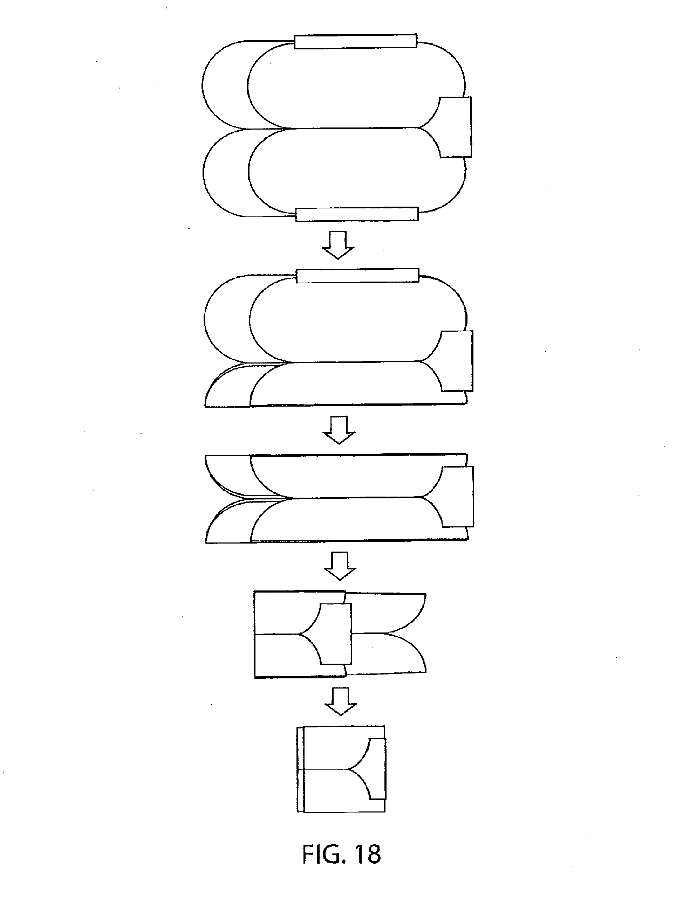

The tubular airbags 10 described herein are easier to fold than traditional airbags, as they lay flat. This allows for an accurate folding and a lower package volume. The airbags are also able to be sewn with flat sewing seams, with junction of the tube structures by side tethers or straps. Examples of potential folding and sewing configurations are illustrated by Figures 16 and 18. As shown particularly by Figure 18, once the tubular airbag is folded, it lays in a substantially flat manner and may be rolled up for stowage.

In order to manufacture tubular airbag 10, tubular structures 12 may be individually formed and secured to one another using any of the various securing systems 28 described herein. Alternatively, a top layer of material may be secured to a bottom layer of material with a seam extending the length thereof at the half way point, in order to create two side-by-side structures 12.

In use, the tubular airbag system is packed into a compartment or opening in a seat back, a steering wheel, or any other component in the vehicle from which an airbag may deploy. There is provided a system for attaching the tubular airbag system to an interior component of a vehicle. The attaching system may include one or more tubes 38 extending from an opening in each tubular structures which are intended to attach to an inflation source.

More specifically, the method for installing an airbag in a seat may include providing the tubular airbag system, including a system for securing the plurality of tubular structures to one another; providing a system for detecting a crash condition and causing the airbag to deploy; providing an inflation system for inflating the airbag; securing the airbag to the seat; securing the system for detecting a crash condition at a location that enables it to communicate with an activate the airbag upon a crash condition; and securing the system for inflating the airbag to the opening for receiving inflation gas.

Changes and modifications, additions and deletions may be made to the structures and methods recited above and shown in the drawings without departing from the scope of the invention and the following claims.

## Claims

1. A tubular airbag system for use in a passenger transport vehicle, comprising;
(a) a plurality of tubular structures, the plurality of tubular structures comprising a stacked configuration of four tubular structures (12) having two side-by-side tubular structures (12a,12b) forming an upper layer and a further two side-by-side tubular structures (12c, 12d) forming a lower layer, each tubular structure having a length dimension that is greater than its width or height dimension and an opening (20) for receiving inflation gas; and
(b) a system (28) for securing the upper layer of the tubular structures to the bottom layer of tubular structures;
**characterised in that**;
each of said two side-by-side tubular structures is formed from a top layer material secured around the perimeter to a bottom layer of material with a seam extending along the length at a point half way across the width of each of said two side-by-side tubular structures.

2. The tubular airbag system of claim 1, further comprising a system (38) for delivering inflation gas to the tubular airbag system.

3. The tubular airbag system of claim 1 or claim 2, further comprising a cushion (40) secured to the tubular airbag (10).

4. The tubular airbag system of any of claims 1 to 3, wherein the system (28) for securing the upper layer of tubular structures to the lower layer of tubular structures by:
one or more straps (30);
and/or,
a series of sewn stitches, high frequency welding, or adhesives.

5. The tubular airbag system of any of claims 1 to 4, further comprising a system (38) for attaching the tubular airbag system (10) to an interior component (42) of a vehicle.

6. The tubular airbag system of claim 5, wherein the system for attaching the tubular airbag system (10) to the interior component (42) of a vehicle comprises one or more tubes (38) extending from the opening (20) in each tubular structure which are intended to attach to an inflation source.

7. The tubular airbag system of any of claims 1 to 6, further comprising a source of inflation gas in fluid communication with each tubular structure (12).

8. The tubular airbag system of any of the claims 1 to 7, wherein the plurality of tubular structures is adapted to cushion an occupant's forward momentum.

9. The tubular airbag system of any of claims 1 to 8, wherein one or more tubular structures comprising the upper layer have a length that is shorter than one or more tubular structures comprising the lower layer.

10. The tubular airbag system of any of claims 1 to 9, installed on a seat back (42) of an aircraft seat.

11. The tubular airbag system of any of the preceding claims, wherein the plurality of tubular structures are associated with a passenger seat back such that, in use, the plurality of airbags deploy backward to support a passenger in a passenger seat behind.

12. A passenger seat comprising a seat back wherein a tubular airbag system as defined in any of the claims 1 to 10 is packed into a compartment or opening in the seat back.

13. A steering wheel, wherein a tubular airbag system as defined in any of the claims 1 to 9 is packed into a compartment or opening in the steering wheel.

## Patentansprüche

1. Ein rohrförmiges Prallsacksystem zur Verwendung in Fahrzeugen zur Personenbeförderung enthaltend:
(a) eine Vielzahl von rohrförmigen Strukturen, wobei die Vielzahl von rohrförmigen Strukturen einen übereinander angeordneten Aufbau von vier rohrförmigen Strukturen (12) aufweist mit zwei Seite an Seite befindlichen rohrförmigen Strukturen (12a, 12b), die eine obere Lage bilden und weiterhin zwei Seite an Seite befindliche rohrförmige Strukturen (12c, 12d), die eine untere Lage bilden, wobei jede rohrförmige Struktur eine Längenabmessung aufweist, die größer ist als ihre Breiten- oder Höhenabmessung sowie eine Öffnung (20) zur Aufnahme eines Treibgases; und
(b) ein System (28) zur Befestigung der oberen Lage der rohrförmigen Strukturen an die untere Lage rohrförmiger Strukturen;
**dadurch gekennzeichnet, dass**
jede der beiden Seite an Seite befindlichen rohrförmigen Strukturen gebildet ist aus einem oberen bahnförmigen Material, welches entlang des Umfangs an ein unteres bahnförmiges Material befestigt ist, mit einem Saum, der sich in Längsrichtung im Bereich auf halber Höhe von jedem der beiden Seite an Seite befindlichen rohrförmigen Strukturen erstreckt.

2. Das rohrförmige Prallsacksystem gemäß Anspruch 1 weiterhin enthaltend ein System (38) zur Zuführung eines Treibgases zu dem rohrförmigen Prallsacksystem.

3. Das rohrförmige Prallsacksystem gemäß Anspruch 1 oder 2 weiterhin enthaltend ein Polster (40), welches an dem rohrförmigen Prallsack (10) befestigt ist.

4. Das rohrförmige Prallsacksystem gemäß irgendeinem der Ansprüche 1 bis 3, wobei das System (28) zur Befestigung der oberen Lage rohrförmiger Strukturen an die untere Lage rohrförmiger Strukturen dargestellt wird von:
einem Gurt oder mehreren Gurten (30);
und/oder
einer Reihe von genähten Stichen, Hochfrequenz-Verschweißung oder Haftmitteln.

5. Das rohrförmige Prallsacksystem gemäß irgendeinem der Ansprüche 1 bis 4 weiterhin enthaltend ein System (38) zum Anbringen des rohrförmigen Prallsacksystems (10) an ein Innenausstattungsbauteil (42) eines Fahrzeuges.

6. Das rohrförmige Prallsacksystem gemäß Anspruch 5, wobei das System zum Anbringen des rohrförmigen Prallsacksystems (10) an ein Innenausstattungsbauteil (42) eines Fahrzeuges eine oder mehrere Leitungen (38) umfasst, die sich von der Öffnung (20) in jeder rohrförmigen Struktur erstreckt/erstrecken, welche bestimmt ist/sind, um mit einer Aufblasquelle verbunden zu werden.

7. Das rohrförmige Prallsacksystem gemäß irgendeinem der Ansprüche 1 bis 6 weiterhin enthaltend eine Quelle eines Treibgases, die in fluider Verbindung mit jeder der rohrförmigen Strukturen (12) steht.

8. Das rohrförmige Prallsacksystem gemäß irgendeinem der Ansprüche 1 bis 7, wobei die Vielzahl der rohrförmigen Strukturen angepasst ist, das vorwärts gerichtete Moment eines Fahrgastes zu dämpfen.

9. Das rohrförmige Prallsacksystem gemäß irgendeinem der Ansprüche 1 bis 8, wobei eine oder mehrere rohrförmige Strukturen enthaltend die obere Lage eine Länge aufweisen, die kürzer ist als die Länge der einen oder mehreren rohrförmigen Strukturen enthaltend die untere Lage.

10. Das rohrförmige Prallsacksystem gemäß irgendeinem der Ansprüche 1 bis 9, angebracht an eine Rückenlehne (42) eines Flugzeugsitzes.

11. Das rohrförmige Prallsacksystem gemäß irgendeinem der vorherigen Ansprüche, wobei die Vielzahl der rohrförmigen Strukturen mit einer Fahrgastsitz-Rückenlehne so verbunden ist, dass, bei Anwendung, die Vielzahl von Prallsäcken sich nach hinten entfalten, um einen Fahrgast in einem dahinter liegenden Fahrgastsitz zu stützen.

12. Ein Fahrgastsitz enthaltend eine Rückenlehne, wobei ein rohrförmiges Prallsacksystem gemäß irgendeinem der Ansprüche 1 bis 10 in ein Fach oder eine Aussparung in der Rückenlehne gepackt ist.

13. Ein Lenkrad, wobei ein rohrförmiges Prallsacksystem gemäß irgendeinem der Ansprüche 1 bis 9 in ein Fach oder eine Aussparung in dem Lenkrad gepackt ist.

## Revendications

1. Système de coussin gonflable tubulaire pour utilisation dans un véhicule de transport de passagers, comprenant :
(a) une pluralité de structures tubulaires, la pluralité de structures tubulaires comprenant une configuration empilée de quatre structures tubulaires (12) ayant deux structures tubulaires côte à côte (12a, 12b) formant une couche supérieure et deux structures tubulaires côte à côte supplémentaires (12c, 12d) formant une couche inférieure, chaque structure tubulaire ayant une dimension de longueur qui est plus grande que sa dimension de largeur ou de hauteur et une ouverture (20) pour recevoir un gaz de gonflage ; et
(b) un système (28) pour fixer la couche supérieure des structures tubulaires à la couche basse de structures tubulaires ;
**caractérisé en ce que** :
chacune desdites deux structures tubulaires côte à côte est formée à partir d'un matériau de couche haute fixé autour du périmètre jusqu'à un matériau de couche basse avec une couture s'étendant dans la longueur en un point à mi-chemin dans la largeur de chacune desdites deux structures tubulaires côte à côte.

2. Système de coussin gonflable tubulaire selon la revendication 1, comprenant en outre un système (38) d'apport de gaz de gonflage au système de coussin gonflable tubulaire.

3. Système de coussin gonflable tubulaire selon la revendication 1 ou la revendication 2, comprenant en outre un coussin (40) fixé au coussin gonflable tubulaire (10).

4. Système de coussin gonflable tubulaire selon l'une quelconque des revendications 1 à 3, dans lequel le système (28) pour fixer la couche supérieure de structures tubulaires à la couche inférieure de structures tubulaires comporte :
une ou plusieurs sangles (30) ;
et/ou,
une série de coutures cousues, un soudage haute fréquence, ou des adhésifs.

5. Système de coussin gonflable tubulaire selon l'une quelconque des revendications 1 à 4, comprenant en outre un système (38) de fixation du système de coussin gonflable tubulaire (10) à un composant intérieur (42) d'un véhicule.

6. Système de coussin gonflable tubulaire selon la revendication 5, dans lequel le système de fixation du système de coussin gonflable tubulaire (10) au composant intérieur (42) d'un véhicule comprend un ou plusieurs tubes (38) s'étendant depuis l'ouverture (20) dans chaque structure tubulaire qui sont destinés à se fixer à une source de gonflage.

7. Système de coussin gonflable tubulaire selon l'une quelconque des revendications 1 à 6, comprenant en outre une source de gaz de gonflage en communication fluidique avec chaque structure tubulaire (12).

8. Système de coussin gonflable tubulaire selon l'une quelconque des revendications 1 à 7, dans lequel la pluralité de structures tubulaires est adaptée pour amortir un moment d'élan vers l'avant d'un occupant.

9. Système de coussin gonflable tubulaire selon l'une quelconque des revendications 1 à 8, dans lequel une ou plusieurs structures tubulaires composant la couche supérieure ont une longueur qui est plus courte qu'une ou plusieurs structures tubulaires composant la couche inférieure.

10. Système de coussin gonflable tubulaire selon l'une quelconque des revendications 1 à 9, installé sur un dossier de siège (42) d'un siège d'aéronef.

11. Système de coussin gonflable tubulaire selon l'une quelconque des revendications précédentes, dans lequel la pluralité de structures tubulaires est associée à un dossier de siège passager de sorte que, en utilisation, la pluralité de coussins gonflables se déploie vers l'arrière pour soutenir un passager dans un siège passager se trouvant derrière.

12. Siège passager comprenant un dossier de siège dans lequel un système de coussin gonflable tubulaire tel que défini dans l'une quelconque des revendications 1 à 10 est garni dans un compartiment ou une ouverture dans le dossier siège.

13. Volant de direction, dans lequel un système de coussin gonflable tubulaire tel que défini dans l'une quelconque des revendications 1 à 9 est garni dans un compartiment ou une ouverture dans le volant de direction.
